(19) Europäisches Patentamt / European Patent Office / Office européen des brevets

(11) **EP 1 821 283 A2**

(12) **EUROPEAN PATENT APPLICATION**

(43) Date of publication:
 **22.08.2007 Bulletin 2007/34**

(51) Int Cl.:
 *G09G 3/34* (2006.01)

(21) Application number: **06018006.4**

(22) Date of filing: **29.08.2006**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(30) Priority: **17.02.2006 KR 20060015884**

(71) Applicant: **LG Electronics Inc.**
 **Yongdungpo-Gu**
 **Seoul 150-010 (KR)**

(72) Inventor: **Park, Kyu Dong**
 **Book-gu**
 **Daegu (KR)**

(74) Representative: **Katérle, Axel**
 **Wuesthoff & Wuesthoff**
 **Patent- und Rechtsanwälte**
 **Schweigerstraße 2**
 **81541 München (DE)**

(54) **Display device and displaying method**

(57) A display device is provided that includes a light source (17) for emitting a light, an image forming unit (14) for forming an image using the emitted light and an inputted image signal, and a projection lens (16) for projecting the formed image on a screen (12). The display device may further include an actuator (11) for shifting the image displayed on the screen, a temperature sensor (9) for detecting an ambient temperature around the actuator, and a controller (8) for driving the actuator according to the detected temperature.

The influence of temperature on the actuator is thus minimized and the actuator can increase the resolution of the display device stably by shifting the displaying locations of subsequent images (pixel-shifting).

FIG.1

EP 1 821 283 A2

**Description**

The present application claims priority from Korean Application No. 15884/2006, filed February 17, 2006, the subject matter of which is incorporated herein by reference.

**BACKGROUND**

1. **Field**

Embodiments of the present invention may relate to a display device having an actuator that can effectively improve the resolution of the display device.

2. **Background**

Display devices may be lightweight, slim and large-sized. Specifically, large-sized display devices have been an important issue in the display fields. As digital broadcasting proliferates, projection type display devices with higher resolution may be desired.

**BRIEF DESCRIPTION OF THE DRAWINGS**

The accompanying drawings are included to provide a further understanding of arrangements and embodiments of the invention and are incorporated in and constitute a part of this application. In the drawings, like reference numerals refer to like elements and wherein:

FIG. 1 is a schematic diagram of a display device having an actuator for improving the resolution thereof according to an example embodiment of the present invention;

FIG. 2 is a block diagram of a controller of a display device according to an example embodiment of the present invention;

FIG. 3 illustrates an operation of an actuator in a display device according to an example embodiment of the present invention;

FIG. 4 illustrates an operating principle of a light transmission plate of a display device according to an example embodiment of the present invention;

FIGs. 5 and 6 illustrate a shift of light projected on a screen according to movement of a light transmission plate in a display device;

FIG. 7 illustrates an image of one frame that is divided into a first image and a second image according to an example embodiment of the present invention;

FIG. 8 is a perspective view of an actuator according to an example embodiment of the present invention;

FIG. 9 is an exploded perspective view of an actuator according to an example embodiment of the present invention;

FIG. 10 is an exploded bottom perspective view of a driving device of an actuator according to an example embodiment of the present invention;

FIG. 11 is an exploded perspective view of a holding device of an actuator according to an example embodiment of the present invention;

FIG. 12 is a side view of the driving device of an actuator according to an example embodiment of the present invention;

FIG. 13 is a graph illustrating a variation of a demagnetization factor with respect to temperature of a magnet;

FIG. 14 is a graph illustrating a demagnetization characteristic of a magnet when a gain value applied to an actuator is increased according to temperature; and

FIG. 15 is a flowchart illustrating a method of controlling a display device according to an example embodiment of the present invention.

**DETAILED DESCRIPTION**

A display device having an actuator for improving the resolution thereof will be described below. In this display device, a resolution of the display device can be stably increased by minimizing the influence of temperature on the actuator.

Resolution relates to a number of pixels used to express an image. Resolution may be used as a scale to represent precision in displaying the image. To improve resolution, display devices may use a physical method of increasing the number of pixels. However, embodiments of the present invention may improve the resolution of the display device using a human visual characteristic.

Embodiments of the present invention may display an image with a resolution higher than a physical resolution.

According to an embodiment of the present invention, an image of one frame may be divided into a first image signal and a second image signal. The first image signal and the second image signal are displayed on a first location and a second location of a screen, respectively. In this manner, a human can recognize the resolution as being improved, according to a human visual characteristic (or human visual characteristics).

For example, the first location and the second location of the screen may be spaced apart from each other by less than or more than one pixel in a vertical, horizontal or diagonal direction. An actuator may be used to shift the displaying locations of the first and second images such that they are displayed at the first and second locations, respectively. The actuator may include a light transmission material such that a light path varies when the location and/or an angle of the light transmission material is changed.

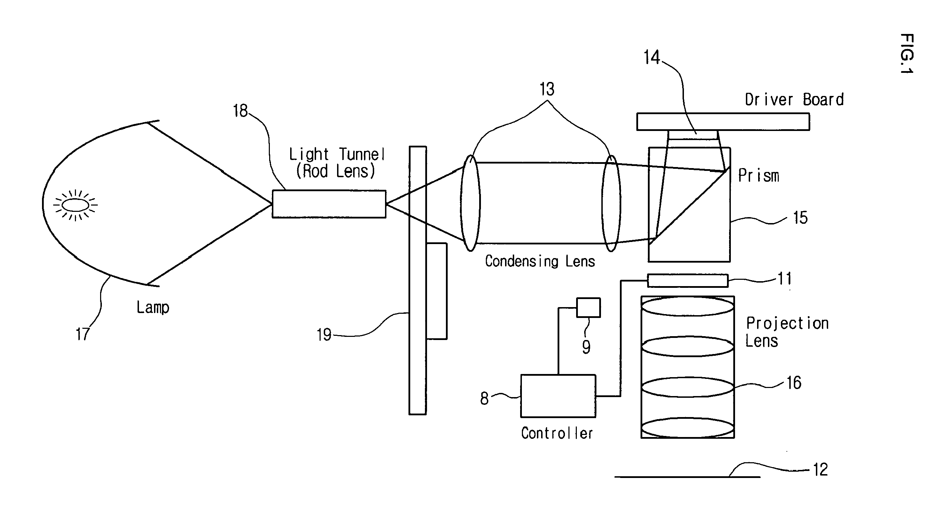

FIG. 1 is a schematic diagram of a display device having an actuator for improving the resolution thereof according to an example embodiment of the present invention. Other embodiments and configurations are also within the scope of the present invention.

More specifically, FIG. 1 shows a digital light processing (DLP) optical system according to an example embodiment of the present invention. As shown in FIG. 1, the DLP optical system includes a lamp 17 for emitting (or providing) light, a rod lens 18 (or light tunnel) for guiding the light emitted from the lamp 17, and a color wheel 19 for dividing white light from the rod lens 18 into a red (R) light, a green (G) light, and a blue (B) light. The DLP optical system further includes a condensing lens 13 for condensing the lights from the color wheel 19, a prism 15 for reflecting the light from the condensing lens 13 and a digital micromirror device (DMD) 14 for projecting the reflected light onto a screen 12. Still further, the DLP optical system may include an actuator 11 (or light regulator) for shifting the light reflected from the DMD 14 according to time variation, and a projection lens 16 for magnifying and projecting the light from the actuator 11 onto the screen 12. Although FIG. 1 is discussed with respect to a condensing lens and a projection lens, other numbers of lenses may also be provided.

The DLP optical system may further include a temperature sensor 9 disposed near the actuator 11 and a controller 8 for controlling the actuator 11 according to the temperature sensed by the temperature sensor 9.

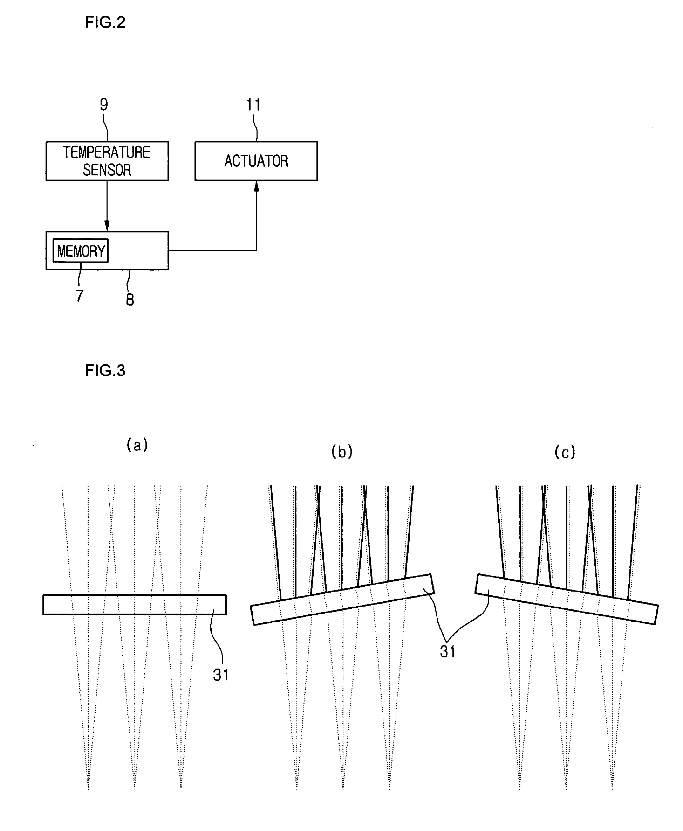

FIG. 2 is a block diagram of a controller of a display device according to an example embodiment of the present invention. More specifically, FIG. 2 relates to the controller 8 shown in FIG. 1. Other embodiments and configurations are also within the scope of the present invention.

As shown in FIG. 2, the controller 8 may include a memory 7 for storing gain values depending on temperature. The controller 8 may read the stored gain values from the memory 7 according to the temperature detected by the temperature sensor 9. The controller 8 controls the actuator 11 according to the gain values based on the sensed temperature.

The actuator 11 may be driven by a magnet. Since the magnet has a demagnetization characteristic according to temperature, the actual gain value may change according to time when the actuator 11 is driven at a constant gain value. For example, if the temperature increases, the magnetic force decreases. Therefore, the gain value has to increase according to the temperature so as to drive the actuator 11 constantly.

According to embodiments of the present invention, the controller 8 may drive the actuator 11 while changing the gain value according to the temperature change.

Structure and operating principles of the actuator 11 in the display device will now be described in detail.

In the DLP optical system of FIG. 1, the white light emitted (or provided) from the lamp 17 may be focused by an inner curvature of a reflector, and the focused light may pass through the rod lens 18.

As one example, the rod lens 18 may be provided by attaching four small and elongated mirrors to one another. The light passing through the rod lens 18 may be scattered and reflected so that brightness is uniformly distributed.

The brightness of light is uniform so as to obtain a uniform brightness of light that will be finally projected onto the screen 12. The rod lens 18 performs this function and thus is an optical element of the projection type display device.

The light passing through the rod lens 18 is transmitted through the color wheel 19 for color separation. The color wheel 19 rotates according to a vertical synchronization of the image.

Then, the light passes through the condensing lens 13 and is reflected by the prism 15 such that the light is directed to the DMD 14. The prism 15 may totally reflect or transmit the light depending on an incident angle of the light.

The light incident on the DMD 14 may be redirected toward the screen 12 depending on the ON/OFF state of the micromirrors of the DMD 14, which are controlled in response to sampled pixel values.

The DMD 14 changes into the ON-state or the OFF-state depending on the image signals inputted from a signal processor (not shown). Through these procedures, a predetermined image may be formed.

The image reflected from the DMD 14 and projected on the screen 12 passes through the actuator 11 and the projection lens 16. The image is enlarged and projected onto the screen 12.

The actuator 11 may be disposed between the prism 15 and the projection lens 16. The actuator 11 may also be disposed between the screen 12 and the projection lens 16. Still further, the actuator 11 may be disposed between the DMD 14 and the prism 15.

The light may be projected onto different locations of the screen 12 depending on the periodical change in the locations and/or angles of the actuator 11.

As stated above, the actuator 11 may be controlled by the controller 8. More specifically, the controller 8 reads a gain value from the memory 7 according to the temperature sensed by the temperature sensor 9 and changes the gain value of the actuator 11, if necessary.

The actuator 11 may be driven even though the temperature is changed so as to have a projected image at a constant location.

Meanwhile, the image forming device of FIG. 1 receives the first image signal and the second image signal, which are provided by dividing an image of one frame at the signal processor and forms the first image and the second image by the R, G and B composition.

The image forming device may include the color wheel 19, the condensing lens 13 and the DMD 14. After the image signal of one frame is divided into a plurality of image signals, the plurality of image signals are combined into a plurality of images and are then displayed.

A displaying time of one image may be calculated by dividing a displaying time of a one-frame image by the number of images.

In an example embodiment, the image signal of one frame may be divided into the first and second image signals, and the first and second image signals may be combined into the first and second images that are then displayed on the first and second locations of the screen, respectively. Through these procedures, viewers can recognize an improved resolution. In another example embodiment, the image signal of one frame may be divided into more image images.

FIG. 3 illustrates an operation of an actuator of a display device according to an example embodiment of the present invention. Other embodiments and configurations are also within the scope of the present invention. More specifically, FIG. 3 illustrates a light transmission plate 31 of the actuator 11.

FIG. 3(a) shows a state of no light transmission plate 31 or no movement of the light transmission plate 31. In this state, the image projected from the prism or the projection lens is displayed at a same location of the screen.

FIG. 3(b) shows a state of the light transmission plate 31 being rotated in a counterclockwise direction. FIG. 3 (c) shows a state of the light transmission plate 31 being rotated in a clockwise direction.

If the light transmission plate 31 changes from the state of FIG. 3(a) to the state of FIG. 3(b) or the state of FIG. 3(c), the image may be refracted while passing through the light transmission plate 31, such that the image is displayed onto different locations of the screen.

That is, when the light transmission plate 31 operating as an optical path changing device projects the image, the projected image is displayed onto different locations of the screen depending on movement of the light transmission plate 31.

Accordingly, the light transmission plate 31 may operate as an image shifting device to make the image display onto different locations of the screen.

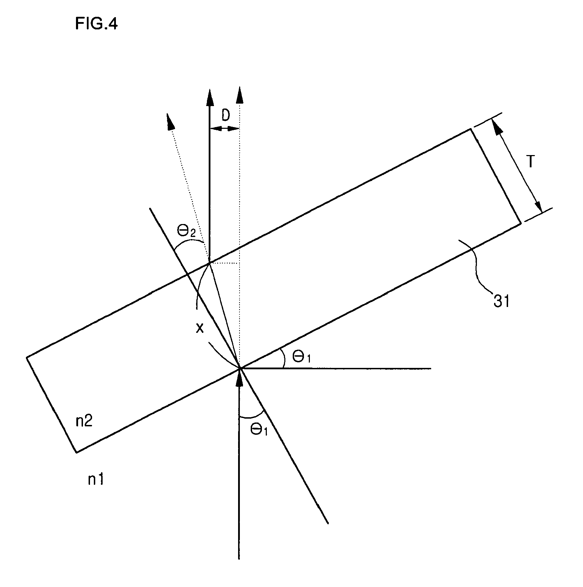

FIG. 4 illustrates an operating principle of a light transmission plate operating as an image shifting device of a display device according to an example embodiment of the present invention. Other embodiments and configurations are also within the scope of the present invention.

A movement degree of the light on the screen 12 can be calculated based on thickness, tilt angle (light incident angle), and refractive index of the light transmission plate 31. The thickness, tilt angle and refractive index of the light transmission plate 31 can be selected based on the required movement degree of the light on the screen 12.

The thickness, tilt angle and refractive index of the light transmission plate 31 may be derived from Snell's law expressed as the following Equation (1):

$$n_1 \sin \theta_1 = n_2 \sin \theta_2 \qquad \ldots \qquad \text{Equation (1)}$$

where $n_1$ is the refractive index of air;
$n_2$ is the refractive index of the light transmission plate;
$\theta_1$ is the incident angle of light; and
$\theta_2$ is the refraction angle of light.

Thus, the optical path difference D between the lights passing through the light transmission plate 31 can be expressed by the following Equation (2):

$$D = \frac{T}{\cos\theta_2}\sin(\theta_1 - \theta_2)$$

... Equation (2)

where $\cos\theta_2 = \frac{T}{x}$, $\sin(\theta_1 - \theta_2) = \frac{D}{x}$, $\theta_2 = \sin^{-1}(\frac{n_1\sin\theta_1}{n_2})$

In addition, the optical path difference D between the lights passing through the light transmission plate 31 may determine the shift of the lights displayed on the screen 12, depending on magnification of the projection lens.

The refractive index of the light transmission plate 31 may fall within a range from 1.4 to 2.0, for example. Other ranges and values of the refractive index are also within the scope of the present invention.

Embodiments of the present invention may use the light transmission plate and the light refraction to make the optical path difference D.

Meanwhile, a reflection mirror may be used to change the optical path. That is, a reflection mirror may be placed on or along the optical path, and the path of the light reflected according to the angle of the reflection mirror may be changed by the changing of the reflection angle of the light.

According to a method of changing the optical path using light reflection, the change of the optical path may be sensitive to the change in the angle of the reflection mirror as compared with a method of changing the optical path using light refraction. Therefore, precise control may be used if light reflection is used to change the optical path.

According to an embodiment of the present invention, a shift degree of the image may be more than or less than a size of one pixel. However, since the shift degree of the image is not great, the optical path changing device (or image shifting device) may be precisely controlled so that the image projected from the projection lens can be shifted within a small range. Therefore, the optical path changing device (or image shifting device) using the light transmission plate may have advantages in that it can be easily controlled and error probability may be greatly reduced.

More specifically, as shown in FIG. 4, if the light is incident onto a same location of the light transmission plate 31, an optical path difference D occurs; however, the traveling direction does not change. In the case of the reflection mirror, even though the light is incident on the same location of the reflection mirror, the traveling direction of the light changes depending on the angles of the reflection mirror. Therefore, a more precise control is required.

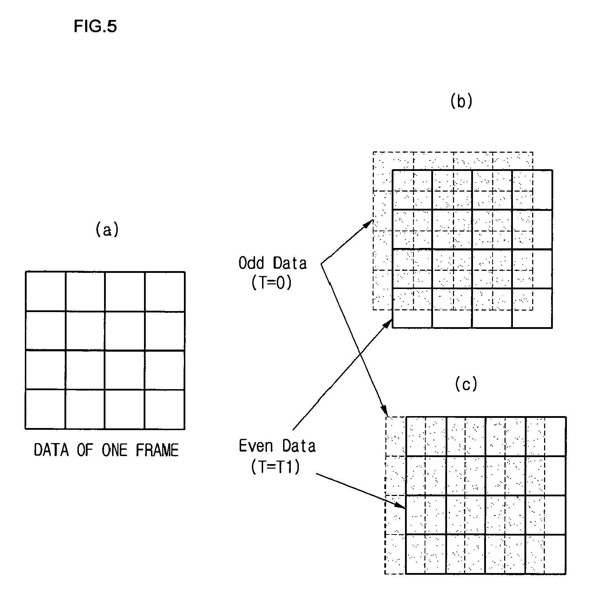

FIGs. 5 and 6 illustrate a shift of light projected onto a screen according to movement of a light transmission plate in a display device according to an example embodiment of the present invention. Other embodiments and configurations are also within the scope of the present invention.

Referring to FIG. 5, in a display device with a rectangular pixel structure, the light transmission plate 31 periodically moves and therefore the location of the image on the screen 12 moves.

In a pixel structure of FIG. 5(a), a same image is displayed at same locations on the screen during a predetermined time (from T=0 to T=T1). However, as shown in FIGs. 5(b) and 5(c), different images are displayed at different locations on the screen at time T=0 and at time T=T1. Thus, a double resolution can be recognized using the same number of pixels.

For example, the image signal of one frame may be split into the first and second image signals. Then, when the image of one frame is displayed, the first and second image signals are combined and displayed in sequence.

For example, assume that the same image information is displayed during 1/60 of a second in one arrangement. According to an example embodiment, the image information may be split into first image information and second image information, and then the first image information and the second image information are respectively displayed at the first and second locations on the screen with each image information being displayed for 1/120 of a second.

In FIG. 5(b), the display locations of the first image (odd data) and the second image (even data) are shifted in a diagonal direction. In FIG. 5(c), the display locations of the first image (odd data) and the second image (even data) are shifted in a horizontal direction.

FIG. 6 illustrates locations of the image displayed onto the screen depending on time in a rhombus pixel structure. In FIG. 6(a), a same image is displayed at a same location during a predetermined time (T=0 to T=T1). However, as shown in FIG. 6(b), different images are displayed at different locations of the screen at time T=0 and at time T=T1. Thus, a double resolution can be recognized using a same number of pixels.

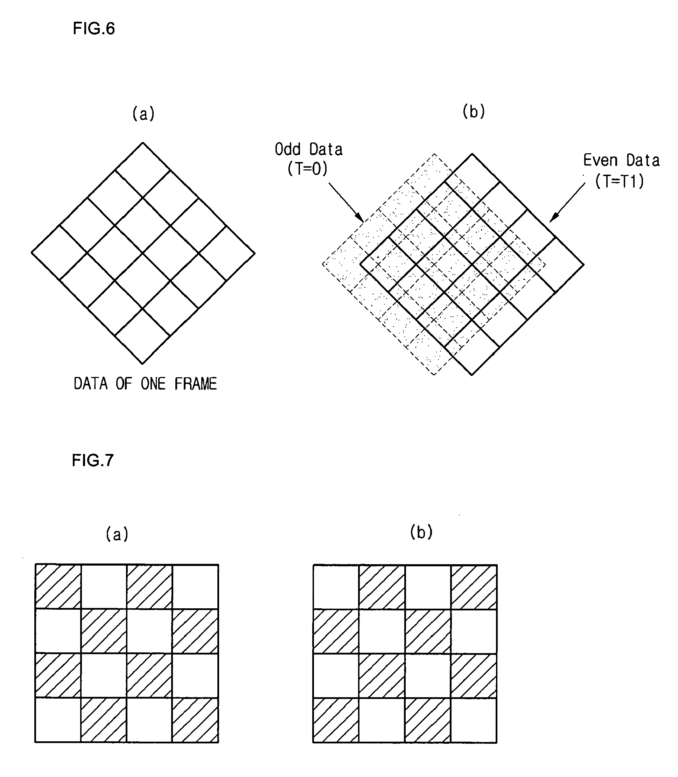

FIG. 7 is an exemplary view of a first image and a second image split from an image of one frame according to an example embodiment of the present invention. Other embodiments and configurations are also within the scope of the present invention.

As shown in FIGs. 7(a) and 7(b), the image of one frame can be split into the first image and the second image, and the first image and the second image can be split depending on the locations of the pixels.

The locations at which the first image (odd data) and the second image (even data) are displayed can be shifted by the light transmission plate 31.

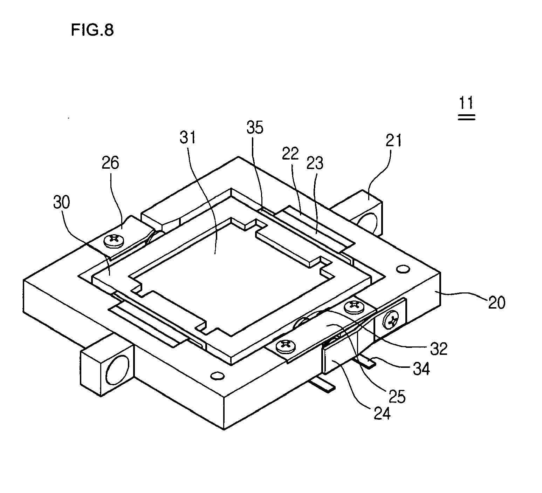

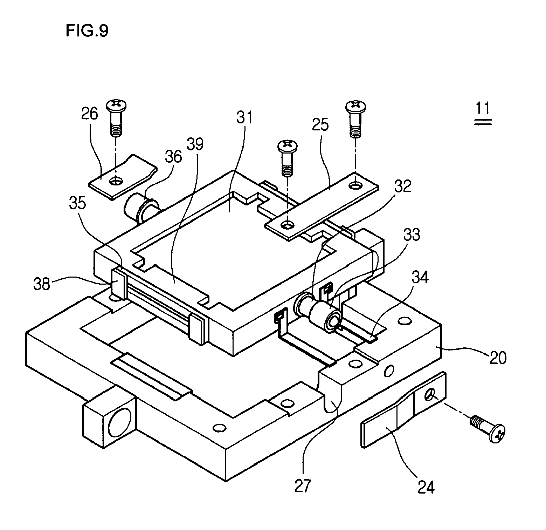

FIG. 8 is a perspective view of an actuator according to an example embodiment of the present invention. FIG. 9 is an exploded perspective view of the actuator shown in FIG. 8. Other embodiments and configurations are also within the scope of the present invention.

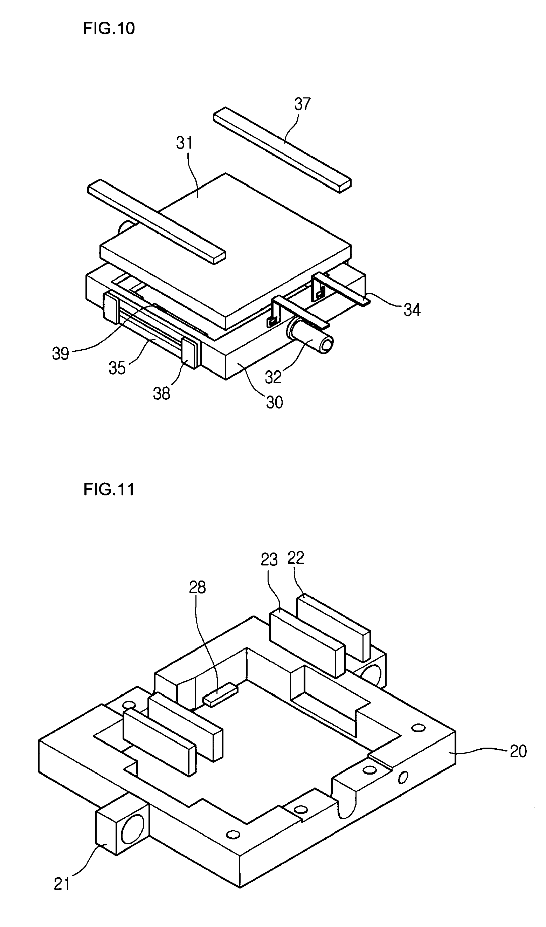

FIG. 10 is an exploded bottom perspective view of a driving device of an actuator according to an example embodiment of the present invention. FIG. 11 is an exploded perspective view of a holding device of an actuator according to an example embodiment of the present invention. Other embodiments and configurations are also within the scope of the present invention.

As shown, in FIGs. 8 to 11, the actuator 11 includes a holding device 20 and a driving device 30.

The holding device 20 may be disposed on an optical path between the image forming device and the screen 12 and has a holding portion 21 at one side. Although a screw hole is illustrated in the drawings, other devices or mechanisms may also be used hold the holding device 20 within the display device. The actuator 11 may be firmly held to the holding device 20 on the optical path.

A magnet 23 and a yoke 22 are formed at one side of the holding device 20. The magnet 23 and the yoke 23 may be formed on one side or both sides of the holding device 20. The magnet 23 and the yoke 22 may be formed on an inner side of the holding device 20.

The magnet 23 may be a dipole magnet having north (N) and south (S) poles. Alternatively, the magnet 23 may be a monopole magnet or a multipole magnet.

The magnet 23 may drive the driving device 30 by using a magnetic field. The yoke 22 may form a passage of a magnetic field to increase the efficiency of the magnetic field.

The driving device 30 may be rotatably coupled to an inside of the holding device 20.

The driving device 30 may be formed in a rectangular or rhombus shape and surround the optical path. The driving device 30 may have a structure suitable for holding the light transmission plate 31.

The light transmission plate 31 is a light transmitting element that rotates at a predetermined angle for a short time and changes the display location of the image. For this purpose, the light transmission plate 31 may be perpendicular to the optical path or inclined at a predetermined angle. The angle of the light incident on the light transmission plate 31 may be periodically changed.

The driving device 30 may include shafts 32 on both sides (i.e., opposite sides) and may be rotatably connected to shaft inserting grooves 27 on the holding device 20. The driving device 30 may further include first and second bearings 33 and 36. The shaft 32 serves as a rotational axis of the driving device 30 and/or the light transmission plate 31. The rotational axis may be perpendicular to the optical path.

The first bearing 33 may be formed in an approximately cylindrical shape and the shaft 32 may be inserted into the first bearing 33. The first bearing 33 may be disposed on the shaft inserting groove 27 of the holding device 20.

The second bearing 36 makes an outer diameter of the driving device 30 so large that the driving device 30 may be caught by an inner surface of the holding device 20.

That is, the driving device 30 may be inserted into the holding device 20 such that it cannot move in a left direction due to the second bearing 36. A leaf spring 24 may be formed at a right side of the first bearing 33 such that the driving device 30 can not move in a right direction.

An elasticity of the leaf spring 24 may secure a proper movement while holding the driving device 30 such that the driving device 30 can rotate smoothly.

In such a state that only one end of the leaf spring 24 is coupled to the holding device 20, the leaf spring 24 may support the driving device 30.

Meanwhile, a first cover 25 and a second cover 26 are disposed on upper sides of the first and second bearings 33 and 36 so that the driving device 30 may not be released upwardly.

The first cover 25 is coupled to the driving device 30 by two screws, for example, and the second cover 26 is partially coupled to the driving device 30 by one screw, for example. The covers 25, 26 may secure a proper movement in order to allow the driving device 30 to rotate smoothly.

The second cover 26 may have a proper elastic force and its operation may be similar to operation of the leaf spring 24.

In other words, the second cover 26 may serve as an elastic member that can hold (or fix) the driving device 30 to the holding device 20 while securing proper movement of the driving device 30.

A coil 35 may be provided at a side of the driving device 30 (i.e., a side opposing the magnet 23 formed on the holding device 20).

In order to install the coil 35, a coil holder 38 may be provided at a side of the driving device 30 as shown in FIG. 10 such that the coil 35 is supported and held by the coil holder 38. The coil 35 may be formed in a rectangular shape or an oval shape, for example. Thus, the driving device 30 can move around the magnet 23 along a direction of current.

When power is supplied to the coil 35 through a power line 34, current flows through the coil 35 and thus an attractive force and a repulsive force are generated due to interaction with the coil 35 provided at the holding device 20, thereby driving the driving device 30. The driving device 30 rotates about the rotational axis in a clockwise or counterclockwise direction depending on the direction of the current applied to the coil 35.

According to an example embodiment of the present invention, a magnet may be provided at a side of the driving device 30. A coil holder may be provided at a side of the holding device 20 and opposing the magnet, and a coil may be supported by the coil holder.

As illustrated in FIG. 10, the light transmission plate 31 may be coupled to the driving device 30. The light transmission plate 31 may be positioned on a protrusion 39 formed at an inside of the driving device 30, and then held (or fixed) by a supporting member 37. FIG. 9 shows a shape of the protrusion 39.

In addition, the light transmission plate 31 may be injected together with the driving device 30. The light transmission plate 31 can then be held to the driving device 30 without any additional supporting member 37.

As illustrated in FIG. 11, a stopper 28 may be provided at an inside of the holding device 20 so as to limit a rotational angle of the driving device 30. Thus, due to the stopper 28, the rotational range of the driving device 30 may be limited to below a predetermined angle under an external impact or an erroneous operation or an excessive operation.

The actuator 11 may be disposed on the optical path of the display device and may be rotated due to interaction of the coil 35 and the magnet 23 depending on the applied control current. The rotational range of the driving device 30 can be set within ±0.75°, for example, and can be rotated such that it is periodically disposed at the first location and the second location. The driving device 30 may rotate at least one time while an image signal of one frame is applied. Other rotational ranges of the driving device 30 may also be provided.

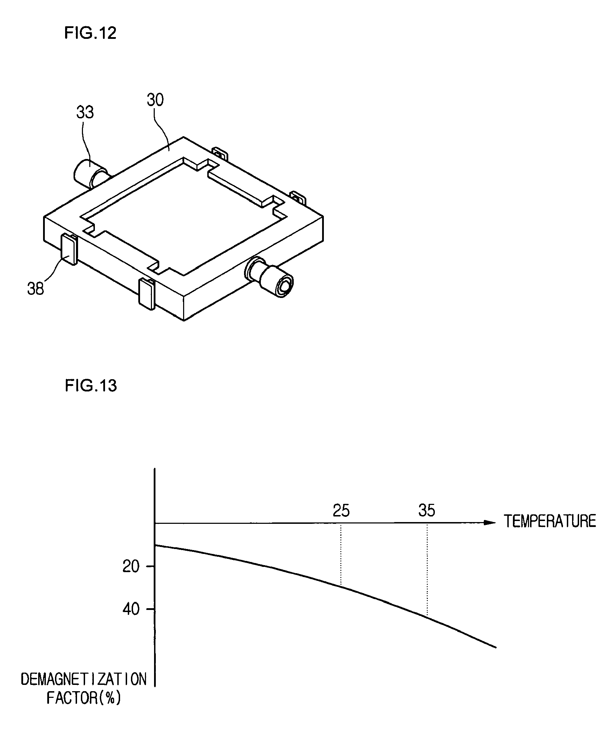

FIG. 13 is a graph illustrating a variation of a demagnetization factor with respect to temperature of a magnet. Other graphs and demagnetization factors may also be used.

The magnet 23 has a demagnetization factor that varies with temperature. That is, when the temperature of the magnet 23 increases, the demagnetization factor increases so that the magnetic force is reduced.

Since the actuator 11 operates at a high speed, the ambient temperature increases with the operation time and thus the magnetic force of the magnet 23 changes.

For example, if the actuator 11 is driven with a constant gain value, the operation state of the actuator 11 is changed according to the temperature. That is, if the temperature increases, the rotational speed or rotational angle of the driving device 30 may be reduced.

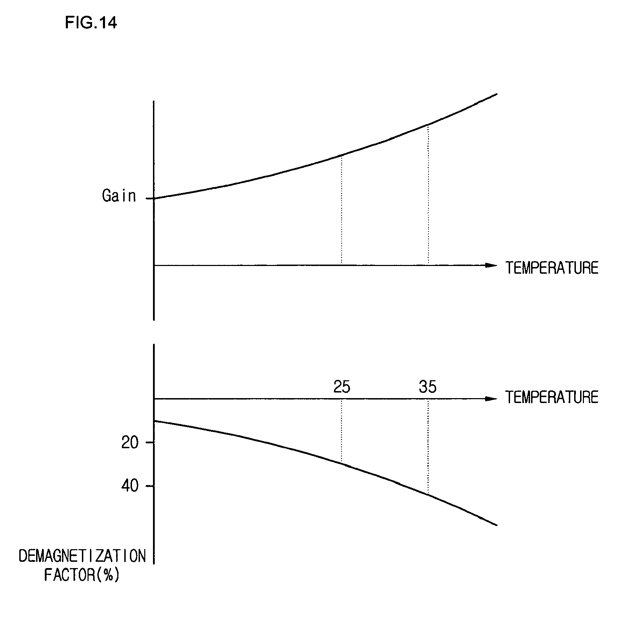

Therefore, if the temperature increases, the gain value applied to the actuator 11 may be increased. FIG. 14 is a graph illustrating a demagnetization characteristic of a magnet when a gain value applied to an actuator is increased according to temperature.

The controller 8 may read a gain value from the memory 7 according to the temperature sensed by the temperature sensor 9 and drive the actuator 11. Therefore, the actuator 11 can operate stably even though the temperature is changed.

The relationship between the temperature and the demagnetization factor of the magnet may be provided by the following Equation (3):

$$\texttt{Demagnetization factor(\%)} = \texttt{0.2temp - 2P}_{\texttt{c}} - 4 \quad \ldots \quad \text{Equation (3)}$$

, where temp represents the temperature of the magnet, and $P_C$ represents a permeance coefficient according to characteristics of the magnet.

The gain value to be corrected according to the temperature increase or decrease from a reference temperature may be expressed by Equation (4). The reference temperature may be a room temperature (25°C).

$$\texttt{\Delta Gain} = \frac{\texttt{Varied Demagnetization Factor(\%)}}{\texttt{100}} \times \text{rGain} \ldots \text{Equation (4)}$$

, where ΔGain is a gain value to be increased or decreased according to the temperature change, and the varied demagnetization factor is a difference between the demagnetization factor at a previous temperature and the demagnetization factor at a current temperature, and rGain is a gain value applied at the reference temperature.

More specifically, the gain value is an analog voltage value for driving the actuator 11 through the control of the actuator 11, and ΔGain is a gain value to be added according to reduction of the demagnetization factor.

Therefore, the gain value to be applied to the actuator 11 according to the varied demagnetization factor (%)

and $\Delta$Gain can be expressed by the following Equation (5):

$$\text{Gain} = \text{rGain} + \Delta\text{Gain} \qquad \dots \qquad \text{Equation (5)}$$

Therefore, the controller 8 may calculate the demagnetization factor (%) according to the temperature sensed by the temperature sensor 9 using Equation (1) and then the controller 8 may calculate $\Delta$gain by comparing the calculated demagnetization factor with the demagnetization factor at the reference temperature.

The gain value applied to the actuator 11 may be calculated by Equation (5).

The actuator 11 may operate stably regardless of the temperature variation.

Meanwhile, since the gain value according to the temperature is stored in the memory 7, the gain value to be applied to the actuator 11 according to the temperature detected by the temperature sensor 9 can be calculated.

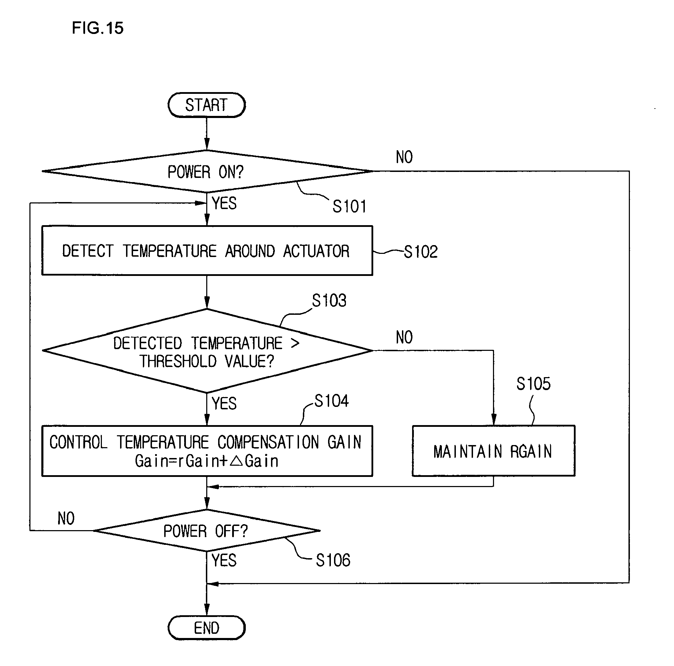

A method of controlling the display device according to an example embodiment of the present invention will now be described with reference to FIG. 15. FIG. 15 is a flowchart illustrating a method of controlling a display device according to an example embodiment of the present invention. Other embodiments and configurations are also within the scope of the present invention.

In operations S101 and S102, an ambient temperature around the actuator is detected when a user inputs a power-on command.

In operation S103, a determination is made whether the detected ambient temperature exceeds a threshold value.

When the detected ambient temperature exceeds the threshold value, a temperature compensation gain is adjusted in operation S104.

When the detected ambient temperature does not exceed the threshold value, the previously stored gain is maintained in operation S105.

In operation S106, the process is terminated when the user inputs a power-off command.

As described above, when the temperature is changed, automatic adjustment (e.g., the increase of the gain value) can be achieved by detecting the ambient temperature around the actuator 11 and correcting the gain value of the actuator 11 based on a demagnetization characteristic according to the temperature variation. Therefore, an actuator for improving the resolution of the display device can operate stably.

Embodiments of the present invention may improve an image quality of a projection type display device by preventing an actuator from being abnormally operated due to an increased temperature.

Embodiments of the present invention may be directed to a display device that substantially obviates one or more problems.

Embodiments of the present invention may provide a display device having an actuator that can be driven without influence of an internal temperature, thereby improving the resolution thereof.

Embodiments of the present invention may provide a projection type display device having high resolution.

Embodiments of the present invention may provide a display device that includes a light source, an image forming unit (or device), a projection lens, an activator, a temperature sensor and a controller. The light source may emit a light. The image forming unit may form an image using the emitted light and an inputted image signal. The projection lens may project the formed image onto a screen. The actuator may shift the image displayed on the screen. The temperature sensor may detect an ambient temperature around the actuator. The controller may drive the actuator according to the detected temperature.

Embodiments of the present invention may provide a display device that includes a light source, an image forming unit, a projection lens, an activator, a temperature sensor and a controller. The light source may emit a light. The image forming unit may form an image using the emitted light and an inputted image signal. The projection lens may project the formed image onto a screen. The actuator may be disposed on an optical path through which the image is projected to change the optical path. The temperature sensor may detect a temperature. The controller may vary a voltage applied to the actuator according to the detected temperature. The controller may increase the applied voltage when the detected temperature is higher than a set temperature. The controller may decrease the applied voltage when the detected temperature is lower than the set temperature.

Embodiments of the present invention may provide a displaying method that includes emitting a light, forming an image using the emitted light and an inputted image signal, and periodically changing a traveling direction of the image by varying a driving signal applied to an actuator having a light transmission plate according to a temperature. The method may also include projecting the image on a screen.

Advantages, objects and features of embodiments of the present invention may be set forth in part in the description and in part will become apparent to those having ordinary skill in the art. Objectives and other advantages of embodiments of the present invention may be realized and attained by the structure particularly pointed out in the written description and claims hereof as well as the appended drawings. The foregoing description is exemplary and explanatory and is intended to provide further explanation.

Any reference in this specification to "one embodiment," "an embodiment," "example embodiment," etc., means that a particular feature, structure, or characteristic described in connection with the embodiment is included in at least one embodiment of the present invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

It will be apparent to those skilled in the art that various modifications and variations can be made to embodiments of the present invention. Thus, it is intended that embodiments of the present invention cover the modifications and variations provided they come within the scope of the appended claims and their equivalents.

Although embodiments of the present invention have been described with reference to a number of illustrative embodiments thereof, it should be understood that numerous other modifications and embodiments can be devised by those skilled in the art that will fall within the spirit and scope of the principles of embodiments of the present invention. More particularly, reasonable variations and modifications are possible in the component parts and/or arrangements of the subject combination arrangement within the scope of the foregoing disclosure, the drawings and the appended claims without departing from the spirit of the invention. In addition to variations and modifications in the component parts and/or arrangements, alternative uses will also be apparent to those skilled in the art.

**Claims**

1.  A display device comprising:

    a projection lens to project an image onto a screen;
    an actuator to shift the image displayed on the screen;
    a temperature sensor to detect a temperature around the actuator; and
    a controller to drive the actuator based on the detected temperature.

2.  The display device according to claim 1, further comprising an image forming device to form an image using emitted light and an inputted image signal.

3.  The display device according to claim 2, wherein the image forming device includes a color wheel and a digital micromirror device (DMD).

4.  The display device according to claim 2, wherein the actuator is disposed between the image forming device and the projection lens.

5.  The display device according to claim 1, wherein the actuator includes:

    a holding device;
    a driving device movably coupled to the holding device; and
    a light transmission plate affixed to the driving device to receive the light.

6.  The display device according to claim 5, wherein the actuator further includes:

    a coil provided on the driving device; and
    a magnet provided on the holding device to face the coil.

7.  The display device according to claim 1, further comprising a memory to store a driving control value based on temperature.

8.  The display device according to claim 1, wherein the controller increases an applied voltage to the actuator when the detected temperature is greater than a prescribed temperature, and the controller decreases the applied voltage to the actuator when the detected temperature is less than the prescribed temperature.

9.  A display device comprising:

an actuator, disposed on an optical path, to change the optical path;
a temperature sensor to sense a temperature; and
a controller to adjust the actuator based on the sensed temperature,

wherein the controller increases an applied voltage to the actuator when the sensed temperature is higher than a prescribed temperature, and the controller decreases the applied voltage to the actuator when the sensed temperature is lower than the prescribed temperature.

**10.** The display device according to claim 9, further comprising an image forming device to form an image based on an inputted image signal.

**11.** The display device according to claim 10, wherein the image forming device includes a color wheel and a digital micromirror device (DMD).

**12.** The display device according to claim 9, further comprising a projection lens to project an image on a screen.

**13.** The display device according to claim 12, wherein the actuator is disposed between the image forming device and the projection lens.

**14.** The display device according to claim 9, wherein the actuator includes:

a holding device;
a driving device movably coupled to the holding device; and
a light transmission plate held by the driving device to receive the light.

**15.** The display device according to claim 14, wherein the actuator further includes:

a coil provided on the driving device; and
a magnet provided on the holding device to face the coil.

**16.** The display device according to claim 9, further comprising a memory to store voltage values to be applied to the actuator based on the sensed temperature.

**17.** A displaying method comprising:

providing a light;
forming an image using the light and an inputted image signal;
sensing a temperature;
adjusting an actuator based on the sensed temperature; and
projecting the image on a screen after the image has passed through the actuator.

**18.** The displaying method according to claim 17, wherein adjusting the actuator changes a traveling direction of the image.

**19.** The displaying method according to claim 17, further comprising obtaining a stored gain value from a memory based on the sensed temperature.

**20.** The displaying method according to claim 17, wherein forming the image comprises using a digital micromirror device (DMD).

**21.** A display device comprising;

a light source to provide a light;
an image forming device to form an image based on the light and an inputted image signal;
a projection lens to project the formed image onto a screen;
an actuator to change the optical path;
a temperature sensor to detect a temperature; and
a controller to adjust a voltage applied to the actuator based on a comparison of the detected temperature and a prescribed temperature, wherein the applied voltage is based on a gain value stored in a memory.

22. The display device according to claim 21, wherein the gain value is determined by the following equation:

$$\mathrm{Gain} = \mathrm{rGain} + \Delta\mathrm{Gain},$$

, where rGain is a gain value at a reference temperature and $\Delta$Gain is a gain value to be increased or decreased according to a temperature variation.

23. The display device according to claim 22, wherein $\Delta$Gain is calculated based on the following equation:

$$\Delta\mathrm{Gain} = \frac{\mathrm{Varied\ Demagnetization\ Factor(\%)}}{100} \times \mathrm{rGain}$$

, where the varied demagnetization factor is a difference between a demagnetization factor at a previous temperature and a demagnetization factor at a current temperature.

24. The display device according to claim 23, wherein the demagnetization factor is calculated using the following equation:

$$\mathrm{Demagnetization\ factor(\%)} = 0.2\mathrm{temp} - 2P_c - 4$$

, where temp represents a temperature of a magnet, and Pc represents a permeance coefficient according to a characteristic of the magnet.

25. An actuator comprising:

   a light transmission plate to pass light;
   a driving device to hold the light transmission plate;
   a holding device to support the driving device;
   a magnet provided on one of the holding device and the driving device; and
   a coil provided on the other one of the holding device and the driving device.

26. The actuator of claim 25, further comprising a temperature sensor to sense a temperature.

27. The actuator of claim 26, further comprising a controller to drive the coil based on the sensed temperature.

FIG.1

FIG.2

FIG.3

(a)  (b)  (c)

FIG.4

**FIG.5**

(a)

(b)

(c)

Odd Data
(T=0)

Even Data
(T=T1)

DATA OF ONE FRAME

FIG.6

(a)

(b)

Odd Data
(T=0)

Even Data
(T=T1)

DATA OF ONE FRAME

FIG.7

(a)

(b)

FIG.8

FIG.9

FIG.10

FIG.11

FIG.12

33    30

38

FIG.13

TEMPERATURE

25    35

20

40

DEMAGNETIZATION
FACTOR(%)

FIG.14

Gain

TEMPERATURE

25        35        TEMPERATURE

20

40

DEMAGNETIZATION
FACTOR(%)

FIG.15

```
          ┌──────────┐
          │  START   │
          └────┬─────┘
               │
               ▼
        ◇─────────────◇              NO
        ◇  POWER ON?  ◇ ─────────────────────────────┐
        ◇─────────────◇                               │
               │ YES      ╰─ S101                      │
               ▼                                       │
   ┌─────────────────────────────────────┐            │
   │  DETECT TEMPERATURE AROUND ACTUATOR  │── S102     │
   └──────────────────┬──────────────────┘            │
                      │         S103                   │
                      ▼                                │
          ◇───────────────────────◇        NO         │
          ◇  DETECTED TEMPERATURE > ◇ ──────────┐      │
          ◇    THRESHOLD VALUE?    ◇            │      │
          ◇───────────────────────◇            │      │
                      │ YES    ╰ S104       S105│      │
                      ▼                         ▼      │
   ┌──────────────────────────────────┐  ┌──────────────┐
   │ CONTROL TEMPERATURE COMPENSATION  │  │              │
   │            GAIN                   │  │ MAINTAIN RGAIN│
   │       Gain=rGain+△Gain            │  │              │
   └──────────────────┬───────────────┘  └──────┬───────┘
                      │                          │
          NO          ▼                          │
        ◇─────────────────◇ ◄───────────────────┘
        ◇   POWER OFF?    ◇
        ◇─────────────────◇
                      │ YES    ╰ S106
                      ▼
          ┌──────────┐
          │   END    │ ◄──────────────────────────────┘
          └──────────┘
```

22

**EP 1 821 283 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 158842006